# EUROPEAN PATENT APPLICATION

(11) **EP 4 836 425 A2**
(43) Date of publication of application: **04.11.2026**
(21) Application number: 26206097.3
(22) Date of filing: 01.10.2019
(51) Int. Cl.: H04N 21/2662

(54) **SERVER-SIDE ADAPTIVE MEDIA STREAMING**

(62) Document number(s) of the earlier application(s) in accordance with Art. 76 EPC: 19782570.6 / 4 038 888
(71) Applicant: Streamonkey GmbH, 04103 Leipzig (DE)
(72) Inventor: DIETZ, Fabian, 95445 Bayreuth (DE)
(74) Representative: Grünecker Patent- und Rechtsanwälte PartG mbB

(57) **Abstract**

The present disclosure relates to media streaming and in particular to a media streaming method, program, server and system. A part of media is transmitted from a streaming server to a client and a transfer time is determined for the part of media. The transfer time is compared with the playback duration of the part of media. If the difference between the playback time and the transfer time exceeds a preconfigured value, the bitrate of the media is adjusted.

## Description

The disclosure relates to media streaming and in particular to a streaming server and a streaming method.

### TECHNOLOGICAL BACKGROUND

There have been audio delivery technologies such as Icecast and SHOUTcast, HTTP (HyperText Transfer Protocol) Live Streaming (HLS) and MPEG-DASH (Motion Picture Experts Group Dynamic Adaptive Streaming over HTTP). Icecast is a streaming media project including a server program capable of streaming wideband audio content such as Opus (RFC6716 or RFC8251) or Vorbis over HTTP, video such as as WebM or Theora over HTTP, and MP3, AAC, and NSV over the SHOUTcast protocol (which itself runs over HTTP).

Many or most of the existing streaming devices, at least those for audio only, support classical Icecast HTTP-based streaming which provides for a continuous delivery of audio content via HTTP. As the source audio is encoded, it is put into a buffer at the server side and transmitted to the clients. HLS and MPEG-DASH are working differently. Both use chunking, so audio is cut into pieces and put into respective audio files. These files can be delivered to clients via simple http servers.

MPEG-DASH works by breaking the content into a sequence of small HTTP-based file segments, each segment containing a short interval of playback time of content that is potentially many hours in duration, such as a movie or the live broadcast of a sports event. The content is made available at a variety of different bit rates (representations), i.e., alternative segments encoded at different bit rates covering aligned short intervals of the playback time. While the content is being played back by an MPEG-DASH client, the client uses a bit rate adaptation (Adaptive Bit Rate, ABR) algorithm to automatically select the segment with the highest bit rate possible that can be downloaded in time for playback without causing stalls or re-buffering events in the playback. MPEG-DASH uses HTTP over TCP (Transmission Control Protocol).

Most of the (standalone) streaming devices already present in the market do not support this kind of delivery.

### SUMMARY OF INVENTION

The present invention relates to methods and apparatuses for streaming of media over data networks.

The invention is defined by the scope of independent claims. Some of the advantageous embodiments are provided in the dependent claims.

According to an aspect of the invention, a method is provided for media streaming over HTTP to be performed by a streaming server (200), the method comprising the steps of: receiving (S310) a request for media data from a client (300); transmitting (S320) to the client (300) a first transmission unit including a first part of media data encoded by applying a first type of encoding, determining (330) transfer time of the first transmission unit to the client, adjusting (S350) bitrate of the streaming based on the determined transfer time by transmitting a second transmission unit including a second part of the media data encoded by applying a second type of encoding differing from said first type of encoding by bitrate.

According to an embodiment, the method further comprises the step of judging (S340) whether or not the determined transfer time differs from the media time by more than a predetermined amount, performing the adjusting step (S350), when the transfer time is judged to differ from the media time by more than the predetermined amount, and not performing the adjusting step (S350), when the transfer time is judged not to differ from the media time by more than the predetermined amount.

In addition in some embodiments, when the transfer time is judged to be higher than the media time by more than a first predetermined amount, transmitting the second transmission unit including the second part of the media data encoded by applying encoding with a bitrate lower than said first type of encoding.

In addition in some embodiments, when the transfer time is judged to be lower than the media time by more than a second predetermined amount, transmitting the second transmission unit including the second part of the media data encoded by applying encoding with a bitrate higher than said first type of encoding.

In addition, according to an exemplary implementation, the method further comprises a step of waiting a predetermined waiting time period before transmitting the second transmission unit, the predetermined waiting time period being determined according to the media time.

In an embodiment, the transmitting of the second transmission unit includes selecting, from a storage, a chunk including the second part of media data encoded with the second type of encoding among chunks including the second part of media data encoded with respective types of encoding different from the second type.

The method may further comprise the steps of: receiving requests for the media data from a plurality of clients, transmitting to the plurality of clients the media data in transmission units including media data with the same media time irrespectively of the type of encoding, transmitting to the plurality of clients additional media data in transmission units including media data with the same media time irrespectively of the type of encoding and a client, wherein the additional media data differs for the clients out of the plurality of clients by content.

The method of any of the above mentioned embodiments or exemplary implementations may include the steps of: receiving from the client a connection request; establishing connection with the client in a client-specific thread; and storing a time instant of the connection start for the client.

Advantageously, the media data is audio data. In particular, the streaming may be an Icecast compatible streaming.

The method in some embodiments comprises the steps of: obtaining media data in chunks from a plurality of respective media files; ordering consecutive chunks into continuous stream; and transmitting the continuous stream to the client according to Icecast protocol.

According to another aspect of the invention, a computer program is provided stored on a non-transitory storage medium, which when executed on a processor, performs all steps of any of the methods mentioned above.

According to another aspect of the invention, a streaming server is provided comprising: an interface for HTTP streaming to a client and controllable by the processing circuitry; processing circuitry configured to: receive a request for media data from a client; transmit to the client a first transmission unit including a first part of media data encoded by applying a first type of encoding, determine transfer time of the first transmission unit to the client, adjust bitrate of the streaming based on the determined transfer time by transmitting a second transmission unit including a second part of the media data encoded by applying a second type of encoding differing from said first type of encoding by bitrate.

When referring to the processing circuitry as receiving or transmitting data, this may be implemented by controlling the interface to receive or transmit data. In other words, the processing circuitry may receive or transmit data via the data interface. The data interface here refers to a protocol stack for receiving and/or transmitting data, implemented in the streaming server. The implementation may be in a software and/or in hardware or partially in software and partially in hardware. Thus, the interface may also be implemented by the processing circuitry.

According to an embodiment, the processing circuitry (710) being further configured to: judge whether or not the determined transfer time differs from the media time by more than a predetermined amount, perform the adjusting step, when the transfer time is judged to differ from the media time by more than the predetermined amount, and not perform the adjusting step, when the transfer time is judged not to differ from the media time by more than the predetermined amount.

In some embodiments, when the transfer time is judged to be higher than the media time by more than a first predetermined amount, transmitting the second transmission unit including the second part of the media data encoded by applying encoding with a bitrate lower than said first type of encoding.

Moreover, when the transfer time is judged to be lower than the media time by more than a second predetermined amount, transmitting the second transmission unit including the second part of the media data encoded by applying encoding with a bitrate higher than said first type of encoding.

In some embodiments, the processing circuitry being configured to perform waiting a predetermined waiting time period before transmitting the second transmission unit, the predetermined waiting time period being determined according to the media time.

In an exemplary implementation, the transmitting of the second transmission unit includes selecting, from a storage, a chunk including the second part of media data encoded with the second type of encoding among chunks including the second part of media data encoded with respective types of encoding different from the second type.

The processing circuitry may be configured to control the interface to: receive requests for the media data from a plurality of clients, transmit to the plurality of clients the media data in transmission units including media data with the same media time irrespectively of the type of encoding, transmit to the plurality of clients additional media data in transmission units including media data with the same media time irrespectively of the type of encoding and a client, wherein the additional media data differs for the clients out of the plurality of clients by content.

According to an embodiment, the processing circuitry is further configured to: receive from the client a connection request; establish connection with the client in a client-specific thread; and store a time instant of the connection start for the client.

Advantageously, the media data is audio data. In particular, the streaming is an Icecast compatible streaming.

In some embodiments, the processing circuitry is configured to: obtain media data in chunks from a plurality of respective media files; order consecutive chunks into continuous stream; and transmit the continuous stream to the client according to Icecast protocol.

According to another aspect of the invention, a streaming system is provided comprising: the streaming server as described above further providing an interface to a storage; and the storage storing therein media data cut into chunks of the same media time duration encoded with different bitrates and/or using different codecs, wherein the storage comprises an interface for providing chunks to the streaming server .

Any of the above mentioned embodiments and exemplary implementations may be combined.

In the following embodiments of the invention are described in more detail with reference to the attached figures and drawings, in which
- FIG. 1: is a block diagram showing an exemplary video streaming architecture based on HTTP.
- FIG. 2: is a schematic drawing illustrating method for server-side adaption of bitrate for media streaming.
- FIG. 3: is a flow chart illustrating a method performed at a streaming server for rate adaption.
- FIG. 4: is a flow chart illustrating details of a method performed at a streaming server for rate adaption.
- FIGS. 5A and 5B: both in combination show a message diagram showing interaction between media preparation part, streaming server and client.
- FIG. 6: is a block diagram showing a workflow in an exemplary architecture of a streaming system.
- FIG. 7: is a block diagram illustrating an exemplary structure of a streaming server.

In the following identical reference signs refer to the same or equivalent features if not explicitly specified otherwise. The figures are exemplary embodiments and do not limit the disclosure of the invention to those embodiments. Further features and options will become apparent from the following description.

### DETAILED DESCRIPTION

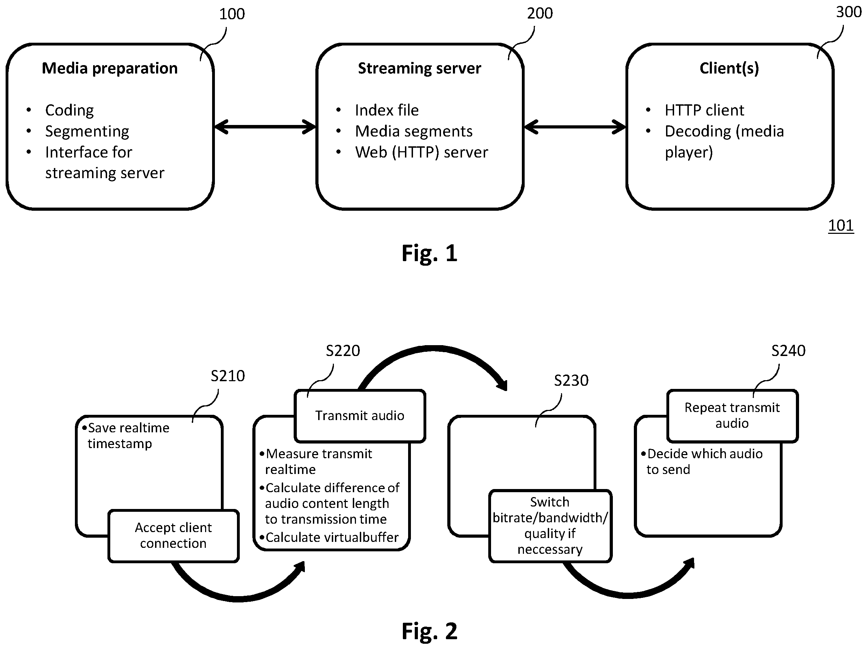

Figure 1 shows an exemplary streaming architecture including three functional blocks: media preparation 100, streaming server 200, and clients 300. These three functional blocks may be spatially separate. The media preparation block 100 may, in general, correspond to a server, a plurality of servers or to a cluster server. The main function of the media preparation server(s) 100 is to prepare media for streaming. Media, such as audio, video and/or associated text information are provided to the media preparation server(s) 100, where the media is encoded and segmented. For example, the media may be provided via a network (any data network) or via any connectable storage medium to the media preparation server(s) 100 in raw format (without compression, as captured by the recording device) or a format already encoded that may include lossless or lossy compression. The media preparation server(s) 100 then encodes the media to obtain one or more representations of the encoded media having the respective one or more bitrates. The different media representations may be obtained with the same encoder or with several different encoders.

It may be desirable to segment the media into portions of the same or aligned playback duration. This may enable to switch between different representations without compromising the continuity of the content at the client. The portions of the same playback duration are sometimes referred to as chunks. Although the playback duration of the portions is the same, in general, the length of the chunks in bits will differ between different representations and may also differ within the same representation. The segmented chunks are then stored in the media preparation server(s) 100. The media preparation server(s) 100 provide an interface over which the streaming server 200 may access the chunks. This may be any protocol for downloading the chunks.

It is noted that the media preparation server(s) 100 may be a simple media server corresponding to a file server merely storing the media segments. The media segments may be stored therein by the content providers from their respective sites or downloaded from them regularly. The present disclosure is not limited by any particular implementation of the media preparation server(s) 100. In fact, the media preparation 100 and the streaming server 200 do not have to be separate and may be implemented on the same server, a plurality of servers or cluster server.

The streaming server 200 receives a request from a client 300 for streaming, fetches the appropriate chunks and transmits them to the client 300. In the exemplary architecture of Fig. 1, the streaming server 200 communicates with the client(s) 300 via HTTP. This may include provision of an index file by the streaming server 200. An index file may be generated by the media preparation server 100 or at the streaming server. An index file corresponds to a playlist including references to the respective media chunks in the order in which they are to be requested and played-back at the client(s) 300. For example, in case of the HTTP streaming, the index may include the URL (Uniform Resource Locator) of the media files containing the chunks. However, the present invention does not require any index file, as it is not limited to HLS or MPEG-DASH streaming or any streaming supporting index file listing a plurality of URLs. Rather, in order to provide HTTP streaming, a single URL address may be used.

The URL of the index file is published on the HTTP server, i.e. at the streaming server 200. Client (software) 300 reads the index, and then requests the listed media files in order given by the index and plays them back continuously. For playing the media back, the decoder corresponding to the encoder used for media preparation is to be applied at the client(s) 300. In general, the client(s) 300 communicate with the streaming server 200 over any kind of data network(s), which may include internet, as well as access networks such as DSL based networks, wireless networks (e.g. WLAN, UMTS, LTE or the like), WANs/LANs, or the like.

The media preparation 100, the streaming server 200, and the one or more client(s) 300 form a streaming system 101.

A streaming server 200 and the corresponding streaming method are provided which dynamically deliver streaming content via HTTP(s) to streaming devices 300.

A high-level overview of the dynamic approach is illustrated in Figure 2. In particular, in step S210, the streaming server 200 receives from a client 300 a request for streaming. In step S220, the streaming server 200 transmits the media to the client 300. In step S230, the server switches the representation of the media and transmits the media in step S240 with the adjusted (switched) representation. Further details of this approach will be explained below.

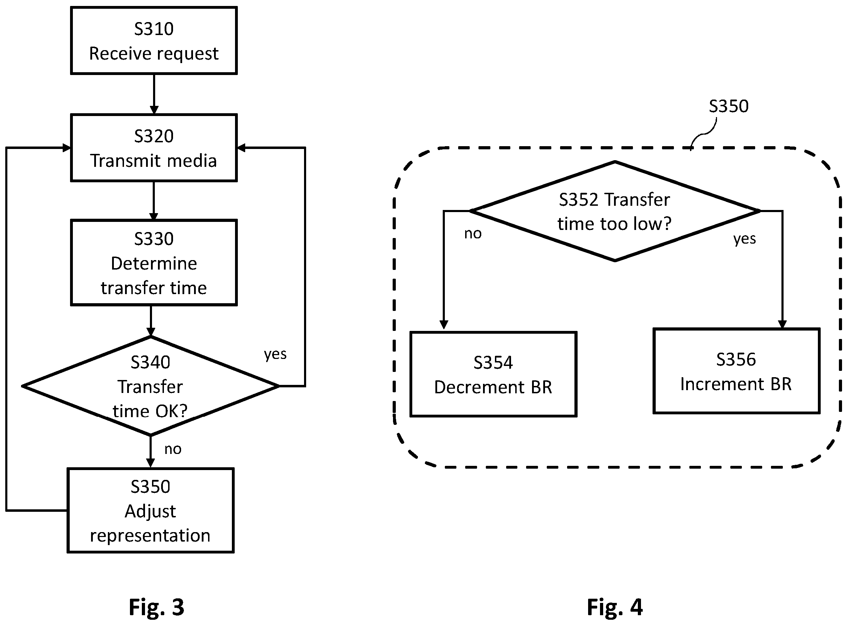

According to an embodiment, a method is provided for media streaming over HTTP to be performed by a streaming server 200. The method is illustrated in Figure 3. The media may be audio, video and/or related text or graphics information, or any other media or their combination. In general, the streaming sever may be any streaming source side, including one or more streaming servers and/or media (preparation) servers.

The method comprises receiving S310 a request for media data from a client 300 and transmitting S320 to the client 300 a first transmission unit including a first part of media data encoded by applying a first type of encoding. Moreover, the method comprises determining S330 of a transfer time of the first transmission unit to the client, and adjusting S350 bitrate of the streaming based on the determined transfer time by transmitting S320 a second transmission unit including a second part of the media data encoded by applying a second type of encoding differing from said first type of encoding by bitrate.

The first and second units may be chunks of a media stream, so that the first chunk is earlier in the play-back sequence than the second chunk. The first type and the second type of encoding may be for instance two representations of the same media encoded with different quality and thus resulting in different bitrates. However, the invention is not limited to providing two representations encoded by the same codec. The representations may be provided by different codecs. Here, the term quality may refer to application of different quantization step sizes or the like. The determination S330 of the transfer time may include measuring the transfer time and/or estimating the transfer time, e.g. based on measurements.

As can be seen in Figure 3, the method may further comprise judging S340 whether or not the determined transfer time differs from the media time by more than a predetermined amount, performing the adjusting step, when the transfer time is judged to differ from the media time by more than the predetermined amount ("no" in step S340), and not performing the adjusting step, when the transfer time is judged not to differ from the media time by more than the predetermined amount ("yes" in step S340). The transfer time here may refer to a time interval necessary to transfer a chunk from the streaming server 200 to the client 300. The media time may refer to playback time (content length), i.e. time interval for playing-back the media of the chunk.

Figure 4 shows an exemplary adjustment S350 of the bitrate (corresponding to representation). When the transfer time is judged in step S352 to be higher than the media time by more than a first predetermined amount, the second transmission unit is transmitted S320 including the second part of the media data encoded by applying encoding with a bitrate lower than said first type of encoding. In other words, the bitrate is decremented S354.

When, on the other hand, the transfer time is judged in step S352 to be lower than the media time by more than a second predetermined amount, the second transmission unit is transmitted including the second part of the media data encoded by applying encoding with a bitrate higher than said first type of encoding. In other words, the bitrate is incremented S356.

The first predetermined amount may be any amount including 0. However, in practice, the first predetermined amount may be set according to the granularity of bitrate of representations of the same media. This is because the adjustment S350 may be performed by selecting another chunk of the same media encoded with a different bitrate. Chunks are not provided for each and every bitrate value possible, but rather provided in some steps such as 8kbps, 16kbps, 32kbps or the like. The present disclosure is not limited to any particular bitrates or their granularity. The differences between the bitrates may be smaller, resulting in a fined adjustment but also higher storage requirements for the chunks. The differences between the bitrates do not have to be the same.

The first predetermined amount may, but does not necessarily have to be the same as the second predetermined amount. These amounts may be determined by setting them to their respective values by the administrator / provider of the streaming server, or may be fixedly programed, or may be configurable in any other way.

The method according to an exemplary implementation, comprises a step of waiting a predetermined waiting time period before transmitting the second transmission unit, the predetermined waiting time period being determined according to the media time. This is to avoid the client 300 requesting further chunks too early. For example, if the transfer time is lower than the playback time, after the adjustment, the bitrate is increased so that the transfer time will be increased. In order to avoid the client 300 to request further chunk (media file) with the same low delay as before the adjustment, the waiting step is introduced.

As mentioned with reference to Figure 1, the streaming server may transmit the second transmission unit including selecting, from a storage, a chunk including the second part of media data encoded with the second type of encoding among chunks including the second part of media data encoded with respective types of encoding different from the second type. The storage may be internal or external storage with respect to the streaming server. The storage may correspond to a file server (media server) which may be a part of the media preparation server or cluster.

The media server is capable of handling requests from one or more client(s) 300. The method may comprise the steps of receiving requests for the media data from the plurality of clients, transmitting to the plurality of clients the media data in transmission units including media data with the same media time irrespectively of the type of encoding, transmitting to the plurality of clients additional media data in transmission units including media data with the same media time irrespectively of the type of encoding and a client, wherein the additional media data differs for the clients out of the plurality of clients by content.

In other words, the (same or different) streaming to two clients may be added personalized data different from the requested streaming.

In particular, the step S210 may include receiving from the client a connection request; establishing connection with the client in a client-specific thread; and storing a time instant of the connection start for the client. The time instant of the connection start may be a timestamp.

While the present invention is not limited to any particular type of media, it may be readily applied to audio streaming. Thus, the media data is audio data. However, the present invention is readily applicable to other kinds of media as well. For example, any of the embodiments described herein is applicable to video streaming as well as to general media streaming including audio and/or video and/or text or graphics information.

In an advantageous implementation, the streaming is an Icecast compatible streaming.

For example, the streaming server may apply a hybrid approach in order to comply with the Icecast. The streaming server side (e.g. the media preparation part 100) encodes the audio with different codecs and/or quality levels, corresponding to different bitrates. This encoded audio is also chunked (segmented) and put into respective files, each file containing one chunk. The audio-chunks are then put together to a continuous stream, e.g. an AAC stream in an ADTS container, MP3 or Opus in Ogg container or any other stream format, again for delivery to the client 300 so that nearly all streaming devices are capable of playing audio in this way. In other words, even streaming clients 300 not supporting chunked HTTP streaming such as HLS or DASH, which is the case for most standalone internet radios available today may receive the audio.

Such streaming server 200 provides a HTTP server compatible with Icecast protocol so that broadcasters do not have to worry about how to connect to the streaming server since for most of them, they can do exactly the same as they did before using classic Icecast based streaming.

Icecast based (source) streaming means the delivery of encoded audio as continuous stream via HTTP PUT/SOURCE protocol and additional HTTP requests for updating the metadata and syncing (synchronizing) it to the media delivered. The streaming server side including the media preparation part 100 encodes the audio with different codecs and quality levels and stores chunks of files centralized. These audio chunks are the base of the delivery to client devices.

Returning to Figure 2, in Step S210, the streaming server 200 accepts HTTP(s) client connection(s). One client may request one or more HTTP connections. The streaming server 200 answers using Icecast compatible http headers. Parsing the http request URL, the streaming server 200 decides which stream to deliver, e.g. mountpoint for Icecast. An Icecast (streaming) server can house multiple broadcasts (or mountpoints) each containing a separate stream of content. The mountpoint is a unique name on the (streaming or media) server identifying a particular stream. The mountpoint may correspond to a filename. A listener can listen to a single mountpoint at a time.

Each client connection is handled using its own thread. The real time of the beginning of the connection is stored in memory. The real time means, for example, the absolute time. The server uses this time for different calculations afterwards, for example for the purpose of determining the transfer time. With regard to mobile streaming, an audio buffer is preferable. At the start of a new connection, a defined (real-time) length of audio material is transmitted as fast as possible to the client 300, e.g. 30 seconds real time of audio, meaning 30 seconds of playback. The server calculates the difference between the length of the audio content (30 seconds) and transmission time of the (one or more) video chunks including these 30 seconds of playback.

Afterwards, while still transmitting new audio to the client, the difference between the audio length and the transmission duration is calculated continuously (regularly), e.g. every predetermined time period. If the transmission of for instance 5 seconds of audio material takes 6 seconds, the buffer is lowering by 1 second. The server-side calculation of the client's buffer is internally called virtual buffer. The buffer is a measure for discrepancy between transmission time and playback time. For example, if transmission time is the same as playback time, which is the ideal case, no buffering at the client is necessary, the media can be played as it arrives. However, such situation is unlikely due to variations in bitrate of the media and variation in transmission media conditions including link quality and co-existing traffic. If the transfer time is lower than the playback time, then the client needs to buffer media data until their playback time. If the transfer time is higher than the playback time, there will be no media data to be played at certain time instances, resulting in breaks and pauses in the streaming. Thus, it is desirable to keep the difference between the transmission time and playback time as small as possible. On the other hand, when the transfer delay is greater than playback time, then the perceived quality is substantially lowered by the breaks. Thus, it is in fact desirable to have some non-zero buffer to compensate for possible delays.

For every transmission unit (this can be a complete audio chunk of defined length or even a single audio frame) the virtual buffer is calculated and updated for this explicit session. It is noted that the transmission unit may be any specified time duration.

If the virtual buffer reaches a defined level the server decides if an adjustment of bandwidth/bitrate must take place. E.g. if the virtual buffer is dropping below a threshold of 25 seconds, the bitrate can be lowered. In this case the server will fetch an audio chunk encoded using a lower bitrate setting. If the virtual buffer is raising again to a desired level, the quality/bitrate can be raised again for the next audio chunk to be transmitted.

If the desired virtual-buffer-level is reached, the server waits a defined time before transmitting the next audio part. The server has to wait because the audio input is "only" at a real-time speed, otherwise the client would request audio material that has not been encoded yet or not even be transferred yet by the broadcaster.

Using this technique, it is also possible to explicitly exchange every audio chunk for every client session. Every millisecond of audio could be transferred to every client independent from the source. That makes it possible to replace advertisement or specified audio tracks for every listener if the broadcaster wishes to do so.

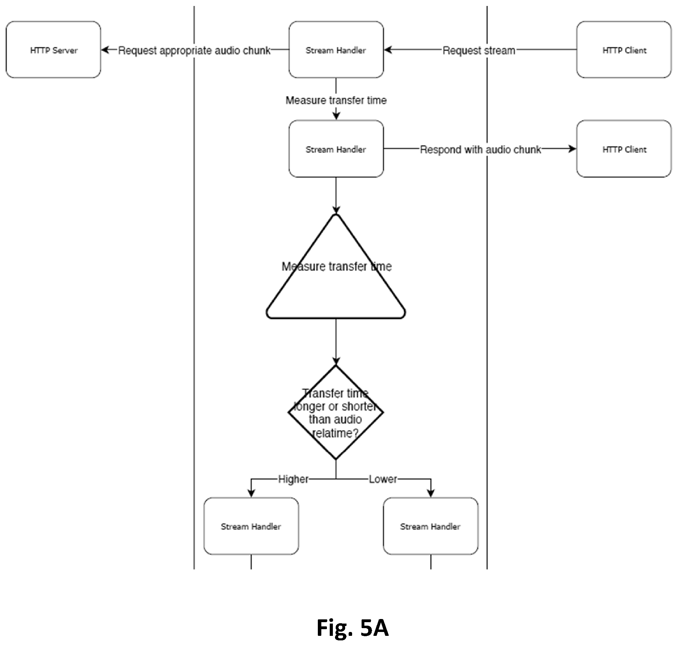

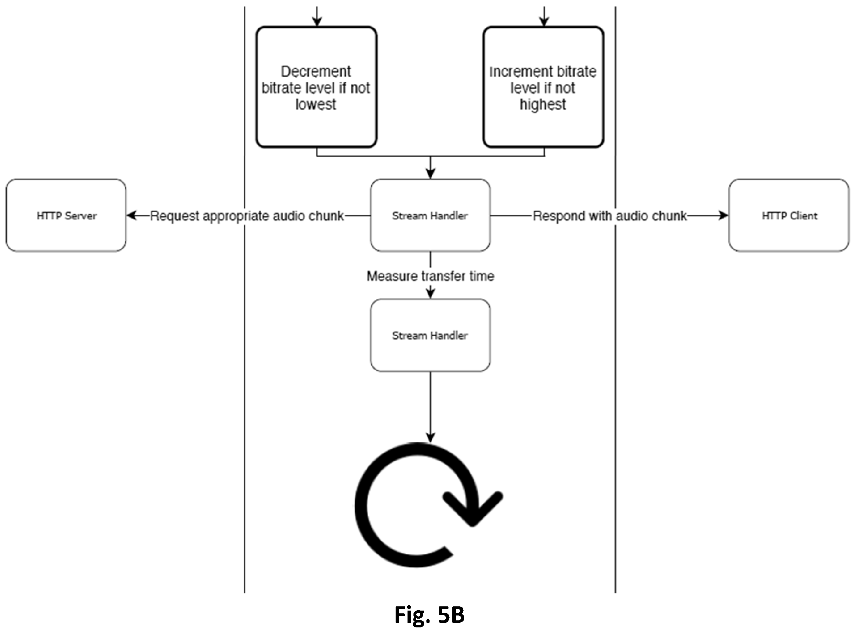

Figure 5 summarizes the method of an embodiment and shows an exemplary interaction between the media preparation 100, streaming server 200 and the client 300. Figure 5 has two parts, Figure 5A and Figure 5B. Figure 5B is a continuation of Figure 5A.

In particular, a HTTP client (corresponding to the client 300) requests stream from a streaming handler (part of the streaming server 200). The Streaming handler then requests the appropriate chunk from a cluster server (representing the media preparation 100) which in this example is a HTTP server. It is noted that the transfer of chunks between encoder 100 and streaming server 200 can be any kind of transfer (meaning any protocol) including binary data exchange, e.g. an accessible file directory, an NFS network share, smb network share, http server or any other custom protocol.

The HTTP (cluster) server then provides the requested chunks to the streaming server (not shown in Fig. 5), which sets up measurement of the transfer time, e.g. by storing a time stamp, and provides the chunks to the HTTP client. The streaming server measures the transfer time. This may be performed, for example, as a part of the HTTP protocol or TCP protocol or in any other way by monitoring feedback from the client, e.g. the timestamp at the start of the http transfer method is stored and another timestamp is evaluated at the end of the transfer of the given amount of data. As soon as this partial transfer is finished the time difference (delta) is calculated. The finishing of the transfer may be recognized based on acknowledgements received from the receiver of media data (client) at the streaming server.For example, TCP acknowledgements or any other layer protocol acknowledgements, or in general any feedback from the client.

After the measurement is obtained, it is judged whether the transfer time is higher or lower than the audio (in general media) real time, meaning the playback time of the data transferred within the transfer time. If the transfer time is higher (e.g. higher by a first predetermined amount of time), the stream handler is called to decrement the bitrate level of the media (Figure 5B). In other words, the streaming server requests from the cluster server appropriate chunks, meaning chunks in a representation coded with lower bitrate than the chunks for which the transfer time was measured to be too high. These chunks are then provided from the streaming server (by the streaming handler) to the client. Accordingly, irrespectively of the requests from the client to the streaming server, the streaming server controls the bitrate of the streaming to the client. This facilitates adaptive provision of streaming with automatic quality control by the streaming server.

If on the other hand, the transfer time was measured lower (e.g. lower by a second predetermined amount of time), the stream handler is called to increment the bitrate level of the media (Figure 5B). In other words, the streaming server requests from the cluster server appropriate chunks, meaning chunks in a representation coded with higher bitrate than the chunks for which the transfer time was measured to be too low. These chunks are then provided from the streaming server (by the streaming handler) to the client. In this way, the client is provided with appropriate bitrate and it is avoided that a large buffer is needed at the client. In other words, the streaming server provides automatically as good quality as the client can receive.

It is noted that the first predetermined amount of time may be the same as the second predetermined amount of time, but does not necessarily have to be the same. As also indicated in Figure 5B, the increase and decrease of the bitrate is limited by the availability of the chunks with the respective lower or higher bitrate. The bitrate may be decreased if it is not already at the lowest level supported. The bitrate may be increased if it is not already at the highest level supported.

This approach may be repeated during the transmission of the streaming. In particular, the transfer time may be measured for every chunk or for every predetermined number of chunks, i.e. continuously during the streaming. For less complex implementations, it is possible to perform the measurements not continuously but with certain periodicity, e.g. every 30 seconds or once a minute or the like. In some implementations, the incrementing and decrementing may be performed stepwisely always by one quality level up or down. In other implementations, the appropriate quality level (bitrate) is chosen by the client which decides the quality for playback, e.g. HLS and MPEG-DASH. The quality of this implementation can not be forced server side and it heavily depends on the client's implementation of calculating the available bandwidth.

The streaming handler is a functional unit of the streaming server, which may be implemented in a software run on the processing circuitry or embedded in the hardware of the processing circuitry.

According to an embodiment, a computer program stored on a non-transitory storage medium, which when executed on a processor, performs all steps of any of the methods mentioned above. In other words, the method may be embodied as a program code for the streaming server.

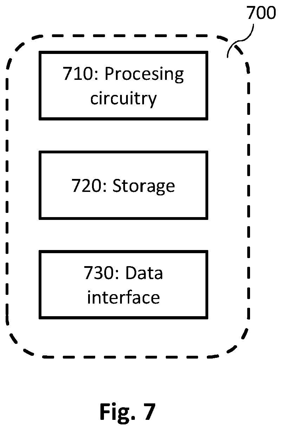

According to another embodiment, illustrated in Figure 7, a streaming server 700 is provided comprising: an interface 730 for HTTP streaming of media data to a client and controllable by a processing circuitry 710. The processing circuitry 710 is configured to control the interface 730 to: receive a request for media data from a client; transmit to the client a first transmission unit including a first part of media data encoded by applying a first type of encoding, determine transfer time of the first transmission unit to the client, adjust bitrate of the streaming based on the determined transfer time by transmitting a second transmission unit including a second part of the media data encoded by applying a second type of encoding differing from said first type of encoding by bitrate.

The streaming server may further comprise a storage 720 for (temporarily) store chunks obtained from the media preparation server or from the own media storage.

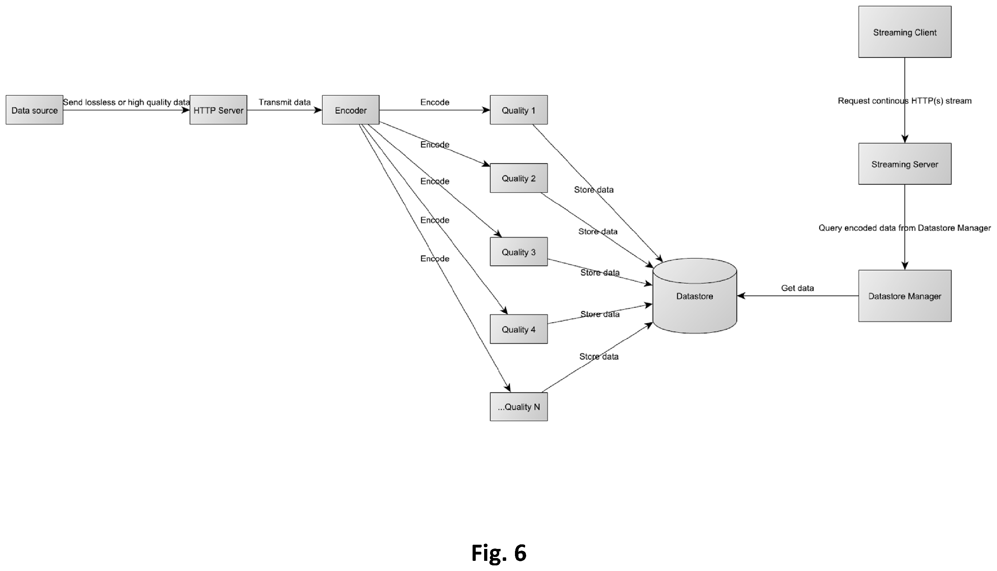

Figure 6 illustrates an exemplary workflow between the data source and the client. In particular, a data source provides raw, lossless or high-quality lossy-coded data. The data source here may be any direct source such as a camera or a plurality of cameras. However, the data source may also be a storage, e.g. located at a content provider, or a portable storage, or any other source. The data source may provide the media data to a (HTTP) server corresponding to media preparation server 100, which encodes the media data with an encoder into N representations with the respective different quality levels (illustrated in Figure 6 as Quality 1 ... Quality N). The encoded N representations are stored in a data storage accessible via data manager (also part to the media preparation server 100). The data manager may be requested by the streaming server to provide the appropriate chunk as described above. The data manager then retrieves the appropriate chunk (i.e. chunk in the sequence of chunks to be provided to the client and having the appropriate Quality k among the quality levels 1 to N. The appropriate quality level k is determined based on the measurement of the transfer time and comparison with the playback time of the respective chunk or a plurality of chunks as described above with reference to Figures 5A and 5B. Thus, when streaming client requests a continuous HTTP stream (such as the one supported by Icecast), the streaming server starts requesting the appropriate chunks, measuring the transfer time and transmitting the chunks to the client as continuous HTTP stream with possibly varying bitrate adapted to the client capability/link quality.

In some embodiments, a system is provided comprising: the streaming server 200 as described above further providing an interface to a storage; and the storage 100 storing therein media data cut into chunks of the same media time duration encoded with different bitrates and/or using different codecs, wherein the storage comprises an interface for providing chunks to the streaming server.

It is noted that the above description regarding methods may also apply to the corresponding apparatuses performing the steps of the method and vice versa.

The invention may be implemented by software, hardware or by any combination of both. In particular, the streaming server may be a general purpose computer with one or more processors or a cluster of computers, wherein the functionality of the streaming server (such as streaming handler or data manager to communicate with the data manager in the media preparation server to fetch the appropriates chunks) is implemented by software. The software then configures the streaming server (one or more processors) to perform the functionality. However, in general, the present invention is not limited to any particular implementation and deployment. Rather, the streaming server may be also implemented entirely or partially by specialized or programmable hardware.

Summarizing, the present disclosure relates to media streaming and in particular to a media streaming method, program, server and system. A part of media is transmitted from a streaming server to a client and a transfer time is determined for the part of media. The transfer time is compared with the playback duration of the part of media. If the difference between the playback time and the transfer time exceeds a preconfigured value, the bitrate of the media is adjusted. As such, the embodiments are limited only by the enclosed claims. Additional embodiments are summarized in the following clauses.
Clause 1. A method for media streaming over HTTP to be performed by a streaming server (200), the method comprising the steps of: receiving (S310) a request for media data from a client (300);transmitting (S320) to the client (300) a first transmission unit including a first part of media data encoded by applying a first type of encoding, determining (330) transfer time of the first transmission unit to the client, adjusting (S350) bitrate of the streaming based on the determined transfer time by transmitting a second transmission unit including a second part of the media data encoded by applying a second type of encoding differing from said first type of encoding by bitrate.
Clause 2. The method according to clause 1, further comprising: judging (S340) whether or not the determined transfer time differs from the media time by more than a predetermined amount, performing the adjusting step (S350), when the transfer time is judged to differ from the media time by more than the predetermined amount, and not performing the adjusting step (S350), when the transfer time is judged not to differ from the media time by more than the predetermined amount.
Clause 3. The method according to clause 2, wherein when the transfer time is judged to be higher than the media time by more than a first predetermined amount, transmitting the second transmission unit including the second part of the media data encoded by applying encoding with a bitrate lower than said first type of encoding.
Clause 4. The method according to clause 2 or 3, wherein when the transfer time is judged to be lower than the media time by more than a second predetermined amount, transmitting the second transmission unit including the second part of the media data encoded by applying encoding with a bitrate higher than said first type of encoding.
Clause 5. The method according to clause 4, comprising a step of waiting a predetermined waiting time period before transmitting the second transmission unit, the predetermined waiting time period being determined according to the media time.
Clause 6. The method according to any of clauses 1 to 5, wherein the transmitting of the second transmission unit includes selecting, from a storage, a chunk including the second part of media data encoded with the second type of encoding among chunks including the second part of media data encoded with respective types of encoding different from the second type.
Clause 7. The method according to any of clauses 1 to 6, comprising the steps of: receiving requests for the media data from a plurality of clients, transmitting to the plurality of clients the media data in transmission units including media data with the same media time irrespectively of the type of encoding, transmitting to the plurality of clients additional media data in transmission units including media data with the same media time irrespectively of the type of encoding and a client, wherein the additional media data differs for the clients out of the plurality of clients by content.
Clause 8. The method according to any of clauses 1 to 7, including the steps of: receiving from the client a connection request; establish connection with the client in a client-specific thread; store a time instant of the connection start for the client.
Clause 9. The method according to any of clauses 1 to 8, wherein the media data is audio data.
Clause 10. The method according to clause 9, wherein the streaming is an Icecast compatible streaming.
Clause 11. The method according to clause 10, comprising the steps of: obtaining media data in chunks from a plurality of respective media files; ordering consecutive chunks into continuous stream; and transmitting the continuous stream to the client according to Icecast protocol.
Clause 12. A computer program stored on a non-transitory storage medium, which when executed on a processor, performs all steps of the method according to any of clauses 1 to 11.
Clause 13. A streaming server (700) comprising: an interface (730) for HTTP streaming to a client and controllable by the processing circuitry; processing circuitry (710) configured to: receive a request for media data from a client; transmit to the client a first transmission unit including a first part of media data encoded by applying a first type of encoding, determine transfer time of the first transmission unit to the client, adjust bitrate of the streaming based on the determined transfer time by transmitting a second transmission unit including a second part of the media data encoded by applying a second type of encoding differing from said first type of encoding by bitrate.
Clause 14. The streaming server according to clause 13, the processing circuitry (710) being further configured to: judge whether or not the determined transfer time differs from the media time by more than a predetermined amount, perform the adjusting step, when the transfer time is judged to differ from the media time by more than the predetermined amount, and not perform the adjusting step, when the transfer time is judged not to differ from the media time by more than the predetermined amount.
Clause 15. The streaming server according to clause 14, wherein when the transfer time is judged to be higher than the media time by more than a first predetermined amount, transmitting the second transmission unit including the second part of the media data encoded by applying encoding with a bitrate lower than said first type of encoding.
Clause 16. The method according to clause 14 or 15, wherein when the transfer time is judged to be lower than the media time by more than a second predetermined amount, transmitting the second transmission unit including the second part of the media data encoded by applying encoding with a bitrate higher than said first type of encoding.
Clause 17. The streaming server according to clause 16, the processing circuitry being configured to perform waiting a predetermined waiting time period before transmitting the second transmission unit, the predetermined waiting time period being determined according to the media time.
Clause 18. The streaming server according to any of clauses 13 to 17, wherein the transmitting of the second transmission unit includes selecting, from a storage, a chunk including the second part of media data encoded with the second type of encoding among chunks including the second part of media data encoded with respective types of encoding different from the second type.
Clause 19. The streaming server according to any of clauses 13 to 18, wherein the processing circuitry is configured to control the interface to: receive requests for the media data from a plurality of clients, transmit to the plurality of clients the media data in transmission units including media data with the same media time irrespectively of the type of encoding, transmit to the plurality of clients additional media data in transmission units including media data with the same media time irrespectively of the type of encoding and a client, wherein the additional media data differs for the clients out of the plurality of clients by content.
Clause 20. The streaming server according to any of clauses 13 to 19, wherein the processing circuitry is further configured to: receive from the client a connection request; establish connection with the client in a client-specific thread; and store a time instant of the connection start for the client.
Clause 21. The streaming server according to any of clauses 13 to 20, wherein the media data is audio data.
Clause 22. The streaming server according to clause 21, wherein the streaming is an Icecast compatible streaming.
Clause 23. The streaming server according to clause 22, wherein the processing circuitry is configured to: obtain media data in chunks from a plurality of respective media files; order consecutive chunks into continuous stream; and transmit the continuous stream to the client according to Icecast protocol.
Clause 24. A system comprising: the streaming server according to any of clauses 13 to 23 further providing an interface to a storage; and the storage storing therein media data cut into chunks of the same media time duration encoded with different bitrates and/or using different codecs, wherein the storage comprises an interface for providing chunks to the streaming server .

## Claims

1. A method for media streaming performed by a streaming server (200), the method comprising the steps of:
receiving (S310) a request for a continuous HTTP stream of media data from a client (300), the media data being segmented into chunks which are portions of the same playback duration;
transmitting (S320), in the continuous HTTP stream, to the client (300) a first chunk including a first part of media data encoded by applying a first type of encoding;
determining (330) transfer time of the first chunk to the client;
adjusting (S350) bitrate of the streaming based on the determined transfer time by transmitting a second chunk including a second part of the media data encoded by applying a second type of encoding differing from said first type of encoding by bitrate;
wherein the transmitting of the second chunk includes selecting, from a storage, the second chunk including the second part of media data encoded with the second type of encoding among chunks including the second part of media data encoded with respective types of encoding different from the first type; and
transmitting the second chunk to the client in the continuous HTTP stream.

2. The method according to claim 1, further comprising:
judging (S340) whether or not the determined transfer time differs from the media time by more than a predetermined amount,
performing the adjusting step (S350), when the transfer time is judged to differ from the media time by more than the predetermined amount, and
not performing the adjusting step (S350), when the transfer time is judged not to differ from the media time by more than the predetermined amount.

3. The method according to claim 2, wherein
when the transfer time is judged to be higher than the media time by more than a first predetermined amount, transmitting the second chunk including the second part of the media data encoded by applying encoding with a bitrate lower than said first type of encoding.

4. The method according to claim 2 or 3, wherein
when the transfer time is judged to be lower than the media time by more than a second predetermined amount, transmitting the second chunk including the second part of the media data encoded by applying encoding with a bitrate higher than said first type of encoding.

5. The method according to claim 4, comprising a step of waiting a predetermined waiting time period before transmitting the second chunk, the predetermined waiting time period being determined according to the media time.

6. The method according to any of claims 1 to 5, comprising the steps of:
receiving requests for the media data from a plurality of clients,
transmitting to the plurality of clients the media data in chunks including media data with the same media time irrespectively of the type of encoding,
transmitting to the plurality of clients additional media data in chunks including media data with the same media time irrespectively of the type of encoding and a client, wherein the additional media data differs for the clients out of the plurality of clients by content.

7. The method according to any of claims 1 to 6, wherein the chunks are stored in the storage in a media preparation server (100), and
the method further comprises downloading, from the media preparation server (100) the first chunk and the second chunk.

8. The method according to any of claims 1 to 6, including the steps of:
receiving from the client a connection request;
establish connection with the client in a client-specific thread;
store a time instant of the connection start for the client.

9. The method according to any of claims 1 to 7, wherein the media data is audio data and the streaming is an Icecast compatible streaming.

10. The method according to claim 8, comprising the steps of:
obtaining media data in chunks, including the first chunk and the second chunk, from a plurality of respective media files in the storage, wherein each media file includes one chunk;
ordering consecutive chunks into continuous stream; and
transmitting the continuous stream to the client according to the Icecast compatible protocol.

11. The method according to any of claims 1 to 9, wherein said request for a continuous HTTP stream of media data from a client includes a single URL address.

12. A streaming server (700) comprising:
an interface (730) for HTTP streaming to a client and controllable by the processing circuitry;
processing circuitry (710) configured to:
receive a request for a continuous HTTP stream of media data from a client, the media data being segmented into chunks which are portions of the same playback duration;
transmit, in the continuous HTTP stream, to the client a first chunk including a first part of media data encoded by applying a first type of encoding, chunks being portions of media data of the same playback duration;
determine transfer time of the first chunk to the client;
adjust bitrate of the streaming based on the determined transfer time by transmitting a second chunk including a second part of the media data encoded by applying a second type of encoding differing from said first type of encoding by bitrate;
wherein the transmitting of the second chunk includes selecting, from a storage, the second chunk including the second part of media data encoded with the second type of encoding among chunks including the second part of media data encoded with respective types of encoding different from the first type; and
transmit the second chunk to the client in the continuous HTTP stream.

13. The streaming server according to claim 12, the processing circuitry (710) being further configured to:
judge whether or not the determined transfer time differs from the media time by more than a predetermined amount,
perform the adjusting step, when the transfer time is judged to differ from the media time by more than the predetermined amount, and
not perform the adjusting step, when the transfer time is judged not to differ from the media time by more than the predetermined amount.

14. The streaming server according to claim 13, the processing circuitry being configured to perform waiting a predetermined waiting time period before transmitting the second chunk, the predetermined waiting time period being determined according to the media time.

15. The streaming server according to any of claims 12 to 14, wherein the media data is audio data, the streaming is an Icecast compatible streaming, and the processing circuitry is configured to:
obtain media data in chunks, including the first chunk and the second chunk, from a plurality of respective media files;
order consecutive chunks into continuous stream; and
transmit the continuous stream to the client according to an Icecast compatible protocol.
